# EUROPEAN PATENT APPLICATION

(11) **EP 4 663 021 A1**
(43) Date of publication of application: **17.12.2025**
(21) Application number: 25180299.7
(22) Date of filing: 02.06.2025
(51) Int. Cl.: A01P 1/00, A62D 3/38

(54) **A METHOD FOR OXIDATIVE DEGRADATION OF PESTICIDES USING PEROXYNITRIC ACID AND A METHOD FOR TREATMENT OF AGRICULTURAL PRODUCTS**

(71) Applicant: Jozef Stefan Institute, 1000 Ljubljana (SI)
(72) Inventor: Recek, Nina, 1000 Ljubljana (SI); Mravlje, Jure, 1000 Ljubljana (SI); Mozetic, Miran, 1000 Ljubljana (SI)
(74) Representative: Patentni Biro AF d.o.o.

(57) **Abstract**

The present invention relates to a method for oxidative degradation of pesticides using peroxynitric acid (also called pernitric or peroxonitric acid, PNA) and a method for treatment of agricultural products. The method for the oxidative degradation of pesticides present on agricultural products comprises exposing at least one agricultural product to PNA. In preferred embodiments of the invention, the exposure may be achieved by soaking the at least one agricultural product in a PNA solution or by spraying the PNA solution on the at least one agricultural product. The preferred concentration range for PNA is between 10 and 2000 mM, most preferably between 200 and 1000 mM. Lower concentrations may not be able to degrade all pesticides on the surface of agricultural products, and higher concentrations may influence the nutritional quality of some agricultural products, particularly fresh vegetables like lettuce. The temperature at which the method is performed may be from 0 to 40 °C.

## Description

### Field of the invention

The invention belongs to the field of methods for degrading pesticides present on agricultural products. The present invention relates to a method for oxidative degradation of pesticides using peroxynitric acid (also called pernitric or peroxonitric acid, PNA) and a method for treatment of agricultural products.

### Background of the invention and the technical problem

Organic compounds acting as pesticides were introduced to agriculture decades ago and enabled increased yield of crops because they are harmful to pests, even at low concentrations, but benign to plants. Pesticides are applied to plants in fields or glasshouses once or several times during plant growth. As with other organic molecules, pesticides have a limited half-life. The half-life of pesticides depends on numerous factors, including the chemical environment, temperature and moisture, and irradiation, particularly with low wavelength radiation.

As pesticides are harmful to humans and animals, they should be removed or destroyed before the consumption of agricultural products. The half-life of many pesticides is much longer than the shelf life of agricultural products, so the degradation should not occur spontaneously, but should be accelerated. Numerous methods for the degradation of pesticides have been developed, and some are used in practice as recently reviewed by Mitra et al. (2024; Science of the Total Environment 935 173026) and Dagnew et al., (2025; Sustainability 2025, 17(10), 4710).

A significant problem arising from many methods for pesticide degradation is the toxicity of the degradation products. Depending on the degradation method, a variety of chemical compounds is synthesized. The scientific literature reports hundreds of degradation products. Many are disclosed in the above-mentioned article by Mitra et al. (2024). The degradation methods that result in the formation of toxic byproducts have limited applications.

An ideal method for the degradation of pesticides would be complete oxidation, i.e., transformation of the pesticide into carbon dioxide, water, and some other inorganic compounds, which are all unharmful. The total oxidation of organic matter is usually achieved by heating in an oxidative atmosphere. This method, however, is not appropriate for the treatment of most agricultural products, especially vegetables. An alternative to oxidation by heating is the application of strong oxidants such as hydrogen peroxide, hypochlorite, and like. However, the application of such oxidants will also be harmful to many agricultural products.

The technical problem is thus the development of novel methods and agents to be used in the oxidative degradation of pesticides. The aim of the invention is to provide a reliable method allowing complete oxidation of pesticides, resulting only in unharmful compounds, such as water, carbon dioxide and minor inorganic compounds.

### Prior art

A novel method for the degradation of pesticides, which leads to almost total oxidation of the pesticide, is the application of gaseous plasma. Some details are disclosed in the scientific paper Y. Bai et al., »Degradation of organophosphorus pesticide induced by oxygen plasma: Effects of operating parameters and reaction mechanisms«, Chemosphere 81 (2010) 408-414. The plasma method, however, is difficult to employ in practice because atmospheric pressure plasmas are spatially non-homogeneous, and many products, such as vegetables, don't withstand evacuation to a level useful for sustaining uniform low-pressure plasma in a large volume.

Utility model CN220936708 discloses a plant for the residual degradation of fruits and vegetables based on ozone degradation, which differs from the present invention, because no ozone is generated or used in the present invention.

Patent application CN117023846 A relates to the technical field of pesticide wastewater treatment, and discloses a method for treating pesticide wastewater. The method comprises the following steps:
- in the presence of a catalyst, carrying out oxidative decomposition reaction on organic pollutants in the pesticide wastewater; wherein the active component of the catalyst is Cu < 2 +>; the oxygenolysis reaction conditions are as follows: the temperature is 250-300 °C, and the pressure is 6-9 MPa;
- carrying out evaporative crystallization on the wastewater obtained in the first step; and carrying out biochemical treatment on the evaporated and crystallized wastewater.

This approach differs from the present invention, because no catalyst is used in the present invention, and the degradation is accomplished at room temperature.

### Description of the solution to the technical problem

The present invention aims to address the issue of pesticide degradation, ensuring safe agricultural products in a convenient, efficient and ecologically acceptable manner. The technical problem is solved as defined in the independent claim, wherein preferred embodiments are defined in dependent claims.

The essence of the method for oxidative degradation of pesticides is use of peroxynitric acid (PNA) for oxidative degradation of pesticides. Until now, PNA has been used as a sterilizing agent as described in patent EP3189857 and in patent application US2025090705. However, the inventors have found that exposure of pesticides to PNA, particularly diluted PNA in the concentration range between 10 to 1000 mM, preferably from 100 to 1000 mM, most preferably from 200 to 1000 mM, which effectively degrades pesticides and oxidizes them to CO₂, H₂O and inorganic compounds, while the treated agricultural products, such as vegetables and fruit, are not significantly affected. The degradation of pesticides with PNA is effective at room temperature and also at lower temperatures (down to the freezing point temperature), which makes the method useful for numerous applications, including the treatment of agricultural products before storage or packaging. This method can also be applied to water solutions of pesticides.

The PNA can be prepared in various manners known to the skilled person. Preferably, nitric acid and hydrogen peroxide are mixed, with possible further components added during mixing. It is important that the synthesis vessel is constantly cooled and maintains a low temperature, preferably below 0 °C. This is important, firstly, because the synthesis reaction is very exothermic, and secondly because PNA decomposes very quickly at room temperature or any temperature above 0 °C.

In a second aspect of the invention, the method for treatment of agricultural products, wherein oxidative degradation of pesticides present on agricultural products is achieved, comprises exposing at least one agricultural product comprising small quantities, usually from 100 to 500 mg/L of pesticides on their surfaces, to diluted PNA as described above. In preferred embodiments of the invention, the exposure may be achieved by soaking at least one agricultural product in a PNA solution for at least 3 seconds, usually from 30 to 600 seconds, or by spraying the PNA solution on the at least one agricultural product. The preferred concentration range for PNA is between 100 and 1000 mM, most preferably between 200 and 1000 mM. Lower concentrations may not be able to degrade all pesticides on the surface of agricultural products, and higher concentrations may influence the nutritional quality of some agricultural products, particularly fresh vegetables like lettuce. The temperature at which the method is performed may be from 0 to 40 °C. The decomposition of PNA at temperatures above 0 °C mentioned above is particularly useful when the treatment is performed, as further rinsing steps are not essential, because of the short life-time of PNA at such temperatures.

The method for oxidative degradation of pesticides present on agricultural products may comprise further steps of washing at least one agricultural product treated with the PNA to remove the residual PNA and possible degradation products. The PNA is a rather unstable molecule, hence, it will self-degrade quickly after treatment. However, the washing step may still be performed to accelerate the removal of PNA from the treated products.

The method for treatment of agricultural products is suitable for all kinds of agricultural products, wherein said products are preferably selected from the group comprising vegetables and fruits.

### Brief description of the drawings

The invention will be further described based on exemplary embodiments, examples, and figures, which show:
- Figure 1: a schematic of the treatment procedure according to a first embodiment of the invention
- Figure 2: a schematic of the treatment procedure according to a second embodiment of the invention
- Figure 3: the absorption spectra of the pesticide Imidacloprid in different concentrations in the range of radiation wavelengths between 200 and 360 nm
- Figure 4: the absorption spectra of PNA at different concentrations in the range of radiation wavelengths between 200 and 360 nm
- Figure 5: the absorption spectra of mixtures of PNA and Imidacloprid in the range of radiation wavelengths between 200 and 360 nm
- Figure 6: the remaining concentration of the pesticide Imidacloprid versus the concentration of PNA at room temperature

### Detailed description of the invention

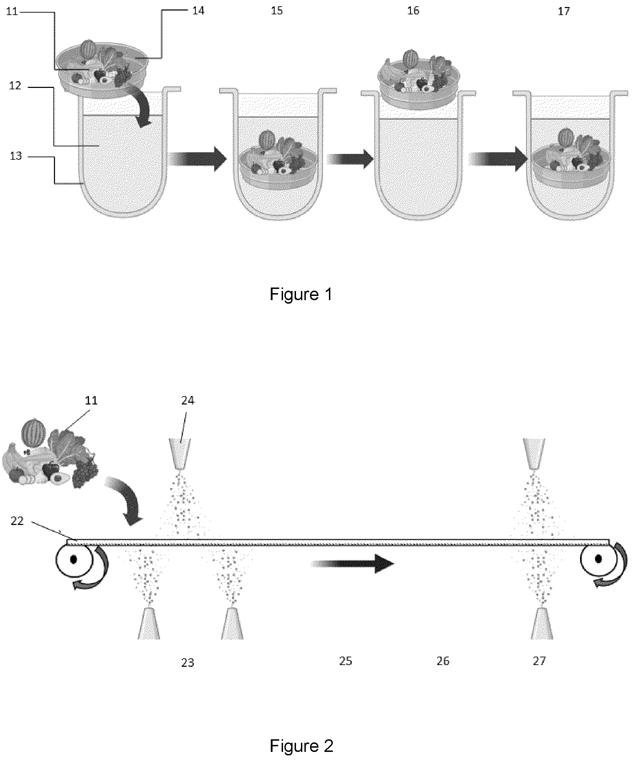

Figure 1 shows the schematic of the treatment procedure according to one possible embodiment of the invention. Agricultural products 11 like fruit, lettuce, and similar products, are covered with pesticides. The agricultural products 11 are immersed in a diluted PNA 12 in a cauldron 13. Preferably, a strainer 14 is also placed into the diluted PNA 12 in the cauldron 13 together with the agricultural products 11 for easier handling.

The agricultural products 11 with pesticides on their surface are left in the diluted PNA solution for at least 3 seconds, preferably from 30 to 600 seconds, as shown schematically as step 15 in Figure 1. Optionally, the agricultural products 11 in the diluted PNA solution 12 are moved gently, preferably by placing the strainer in the configuration marked as step 15 in Figure 1. The PNA interacts with pesticides on the surface of agricultural products in step 15 depicted in Figure 1 by oxidizing them to harmless products, typically carbon dioxide, water, and some other inorganic compounds. When the interaction is completed, i.e., the PNA has reacted with the pesticide, the agricultural products are removed from the cauldron containing diluted PNA.

The agricultural products are drained as illustrated in step 16 depicted in Figure 1. The small amount of the diluted PNA that might have remained on the surface of agricultural products may be removed by immersing the drained agricultural products into a fresh water bath in step 17 depicted in Figure 1. The immersion in a water bath is optional because the amount of PNA left after draining is usually marginal. After immersion in the water bath, the products are drained again, and their surface are free from pesticides.

Figure 2 shows the schematic of the treatment procedure according to the methods of the invention in another embodiment. Agricultural products 11 like fruit, lettuce, and similar, are covered with pesticides. The agricultural products 11 are placed onto a movable conveyor belt 22, which transports the agricultural products through a spraying device 23, where the products are sprayed with diluted PNA. The nozzles 24 are oriented randomly to ensure uniform spraying on three-dimensional objects such as agricultural products. The sprayed agricultural products may be turned once or several times during the spraying with diluted PNA in order to ensure a more uniform deposition of sprayed PNA onto the agricultural products. The sprayed PNA interacts with pesticides on the surface of agricultural products, causing almost complete oxidation of the pesticides. The agricultural products on the conveyor belt 22 move further in the direction of the arrow 25 in Figure 2 and are drained in the next step 26. Optionally, the agricultural products may be sprayed with water as shown in step 27 in Figure 2 to remove the residual PNA.

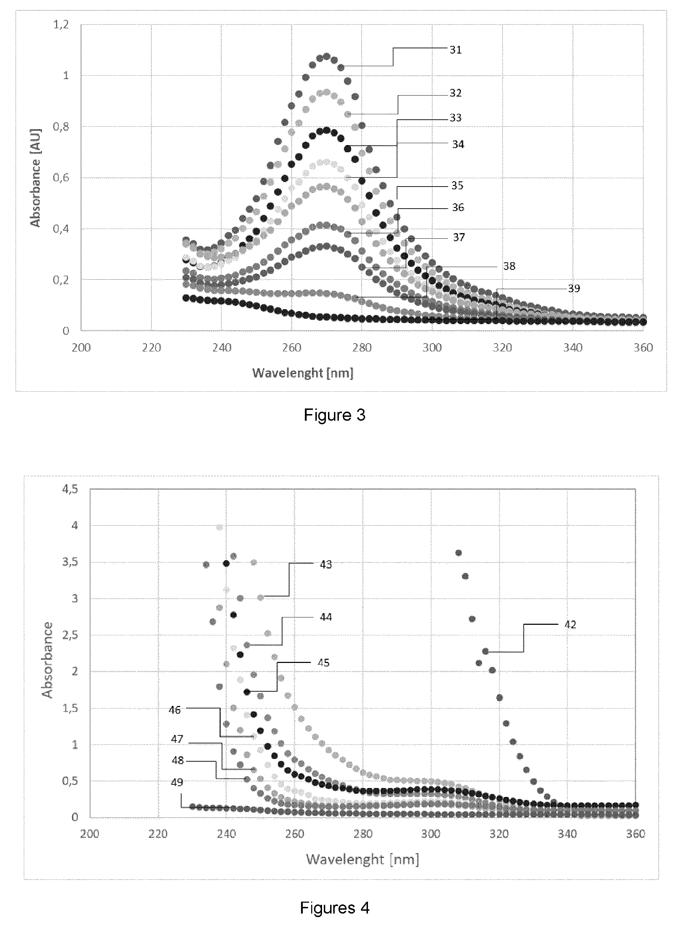

The concentration of many pesticides in a solution may be measured by optical absorption. Namely, many pesticides absorb radiation, and the absorbance peaks at different wavelengths, typically in the ultraviolet range. Figure 3 shows the absorption spectra of Imidacloprid. Imidacloprid is a systemic insecticide widely used worldwide. Its chemical formula is N-{1-[(6-Chloro-3-pyridyl)methyl]-4,5-dihydroimidazol-2-yl}nitramide. Imidacloprid was diluted in water at different concentrations, and the absorption spectra are shown for the following concentrations: 31 - 0.5 g/L, 32 -0.45 g/L, 33 - 0.35 g/L, 34 - 0.3 g/L, 35 - 0.25 g/L, 36 - 0.2 g/L, 37 -0.15 g/L, 38 - 0.05 g/L, 39 - 0 g/L. The absorption of radiation in Figure 3 decreases with decreasing pesticide concentration and becomes indistinguishable as the pesticide concentration approaches zero. Therefore, measuring the absorption spectra enables the determination of the residual concentration of pesticide after treatment according to the methods of the invention.

The concentration of PNA in a water solution is determined according to JP7179289B2. Absorption spectra of PNA (without pesticide) are shown in Figure 4. PNA was diluted with water in different concentrations: 42 - 79 g/L (1 M), 43 -7.9 g/L (0.1M), 44 - 3.95 g/L (0.05 M), 45 -3.16 g/L (0.04 M), 46 - 2.39 g/L (0.03 M), 47 -1.58 g/L (0.02 M), 48 - 0.79 g/L (0.01 M), 49 - 0 g/L (0 M). The highly concentrated PNA (43) exhibits a broad absorption spectrum, covering also the absorption spectrum of the pesticide (Figure 3). Thus, absorption spectroscopy is not an appropriate method for the evaluation of the pesticide degradation upon mixing with concentrated PNA. However, moderate concentrations, such as those used in the present invention, exhibit intensive absorption only at much lower wavelengths than the pesticide. For example, 100 mMol PNA (43) exhibits significant absorption only below about 280 nm, and the absorption spectrum only partially overlaps with the absorption spectrum of the pesticide. Thus, absorption spectroscopy is a suitable method for the detection of the degradation of the pesticide upon treatment with diluted PNA.

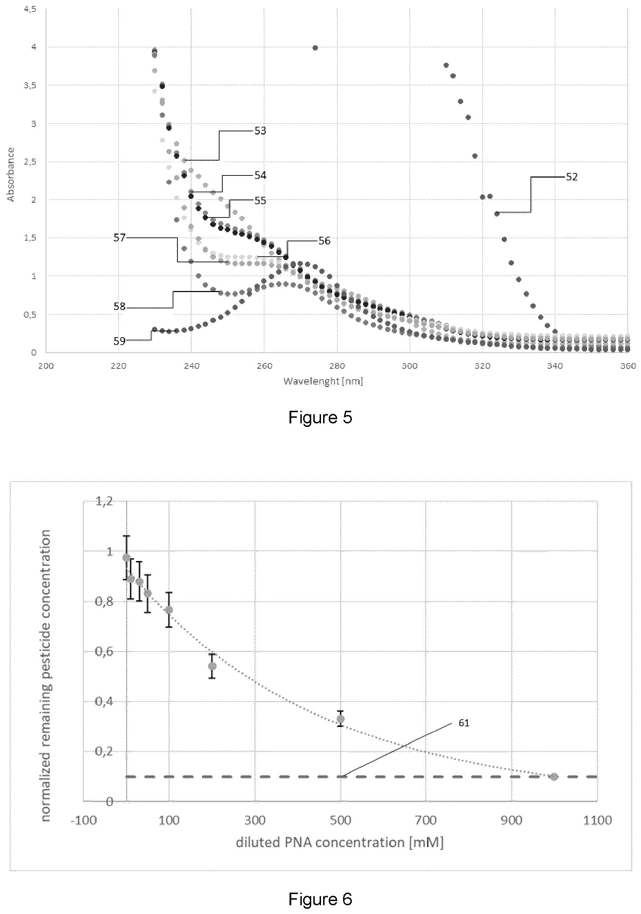

The 0.5 g/L pesticide was mixed with diluted PNA, and the absorption spectra were measured. The results are plotted in Figure 5. The curves in Figure 5 represent the spectra of mixtures of 0,5 g/L of Imidacloprid and diluted PNA in concentrations of 52 - 79 g/L, 53 -7.9 g/L (0.1M), 54 - 3.95 g/L (0.05 M), 55 -3.16 g/L (0.04 M), 56 - 2.39 g/L (0.03 M), 57 -1.58 g/L (0.02 M), 58 - 0.79 g/L (0.01 M), 59 - 0 g/L (0 M).

The curve (59) indicates that 0 PNA does not affect the pesticide because the shape of curve (59) is identical to the shape of curve (31). However, the addition of even the most diluted PNA causes a significant decrease in the absorption peak intensity (curve (58)). A significant decrease in the absorption in the range of wavelengths from 260 to 300 nm indicates a significant decomposition of the pesticide, even when 10 mM PNA was added to the pesticide water solution.

As the concentration of PNA increases, the peak at about 270 nm is not visible in Figure 5 anymore. Instead, a knee in the absorption curves (57) - (53) is observed, and it becomes less obvious when the PNA concentration increases.

Comparison of Figures 3, 4, and 5 enables the determination of the concentration of the remaining pesticide. The concentration of the remaining pesticide was determined by the subtraction of values of absorption intensity at 270 nm in Figure 4 (where the absorption of pesticide peaks) from the values in Figure 5. The result is plotted in Figure 6.

Figure 6 shows the concentration of remaining pesticide versus the concentration of PNA. The pesticide solution was treated with diluted PNA at various concentrations from 10 to 1000 mM. The concentration of remaining Imidacloprid is normalized to the initial concentration (i.e., the concentration determined without adding any PNA in the water solution of Imidacloprid). The dashed line 61 in Figure 6 indicates the detection limit of the absorbance instrument. Figure 6 reveals an almost linear decrease in the remaining Imidacloprid concentration with increasing PNA concentration.

The benignity of the treatment for vegetables was tested by the immersion of lettuce in diluted PNA at a concentration of 1000 mM to detect any harmful effect of the PNA on this vegetable. Lettuce was left in the PNA solution for an hour at room temperature, and visible degradation of lettuce was not detected. Hence, the diluted PNA effectively degrades the pesticide without influencing the lettuce.

Finally, it should be stressed that the selected pesticide concentration (0.5 g/L) is rarely used in agricultural practice. This concentration was selected for the experiments to tackle the worst case. In practice, the pesticide concentration is much lower, so the PNA concentration useful for the degradation of the pesticide below the detection limit (indicated with the dashed line 61 in Figure 6) is much lower in practical cases than in Figure 6.

## Claims

1. A method for oxidative degradation of pesticides comprising a step of exposure of pesticides to peroxynitric acid (PNA) in the concentration range between 10 to 1000 mM.

2. The method according to claim 1, wherein the treatment is performed at a temperature between 0 and 40°C.

3. The method according to claim 1 or claim 2, wherein the exposure is either by spraying with the PNA or by soaking in the PNA.

4. The method according to any of the preceding claims, wherein the PNA concentration is from 100 to 1000 mM.

5. The method according to any of the preceding claims, wherein the PNA concentration is from 200 to 1000 mM.

6. The method according to any of the preceding claims, wherein the PNA is prepared by mixing nitric acid and hydrogen peroxide in a synthesis vessel, which is constantly cooled and maintained at a temperature below 0 °C.

7. A method for treatment of agricultural products comprising the step of the method according to any of the preceding claims, wherein oxidative degradation of pesticides present on agricultural products is achieved by soaking the at least one agricultural product in a PNA solution for at least 3 seconds or by spraying the PNA solution on the at least one agricultural product.

8. The method for treatment of agricultural products according to the preceding claim, wherein the soaking is performed for 3 to 600 seconds.

9. The method for oxidative degradation of pesticides present on agricultural products according to claim 7 or claim 8, wherein the method comprises a further step of washing at least one agricultural product treated with the PNA to remove the residual PNA and possible degradation products.

10. The method according to any of the preceding claims from 7 to 9, wherein the products are selected from the group comprising vegetables and fruits.
